# EUROPEAN PATENT SPECIFICATION

(11) **EP 4 253 742 B1**
(45) Date of publication and mention of the grant of the patent: **18.11.2026**
(21) Application number: 23153739.0
(22) Date of filing: 27.01.2023
(51) Int. Cl.: F02C 6/18, F02C 7/10, F02C 7/224

(54) **RECUPERATED ENGINE WITH SUPERCRITICAL CO2 BOTTOMING CYCLE**
REKUPERATIVES TRIEBWERK MIT ÜBERKRITISCHEM CO2-UNTERFAHRZYKLUS
MOTEUR À RÉCUPÉRATION AVEC CYCLE DE FOND DE CO2 SUPERCRITIQUE

(30) Priority: 29.03.2022 US 202263324817 P
(43) Date of publication of application: 04.10.2023
(73) Proprietor: RTX Corporation, Farmington, CT 06032 (US)
(72) Inventor: MacDONALD, Malcolm P., Bloomfield, 06002 (US); TAYLOR, Stephen H., East Hartford, 06108 (US); RANJAN, Ram, West Hartford, 06117 (US)
(74) Representative: Dehns

(56) References cited:
- US-A1- 2019 249 599
- US-A1- 2020 224 588
- US-B2- 11 230 948

## Description

### TECHNICAL FIELD

The present disclosure relates generally to a system for recovering waste heat in a gas turbine engine, and more specifically to a work recovery system utilizing a supercritical CO2 cycle to recover work from excess heat.

### BACKGROUND

A gas turbine engine typically mixes a carbon based fuel with air within a combustor where it is ignited to generate a high-energy exhaust gas flow. Improving engine operating efficiencies are driven by economic and environmental demands. Most engine inefficiencies are due to heat lost when the high-energy exhaust gas flow exits the turbine and vents to atmosphere. Capture of waste heat may increase overall engine operating efficiencies.

Turbine engine manufacturers continue to seek further improvements to engine performance including improvements to thermal, transfer and propulsive efficiencies.

US 2020/224588 A1 discloses a prior art gas turbine engine as set forth in the preamble of claim 1.

US 2019/249599 A1 discloses a prior art closed cycle heat engine for a gas turbine engine.

US 11 230 948 B2 discloses a prior art work recovery system for a gas turbine engine utilizing an overexpanded, recuperated supercritical CO₂ bottoming cycle.

### SUMMARY

From one aspect, there is provided a gas turbine engine as recited in claim 1.

There is also provided a method of operating a gas turbine engine as recited in claim 12.

Features of embodiments are set forth in the dependent claims.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 schematically shows an example gas turbine engine embodiment.
Figure 2 schematically shows the example gas turbine engine and bottoming cycle system embodiment.
Figure 3 schematically shows another example bottoming cycle system embodiment.
Figure 4 schematically shows another example bottoming cycle system embodiment.
Figure 5 schematically shows another example gas turbine engine and bottoming cycle system embodiment.
Figure 6 schematically shows another example gas turbine engine and bottoming cycle system embodiment.
Figure 7 schematically shows another example gas turbine engine and bottoming cycle system embodiment.

### DETAILED DESCRIPTION

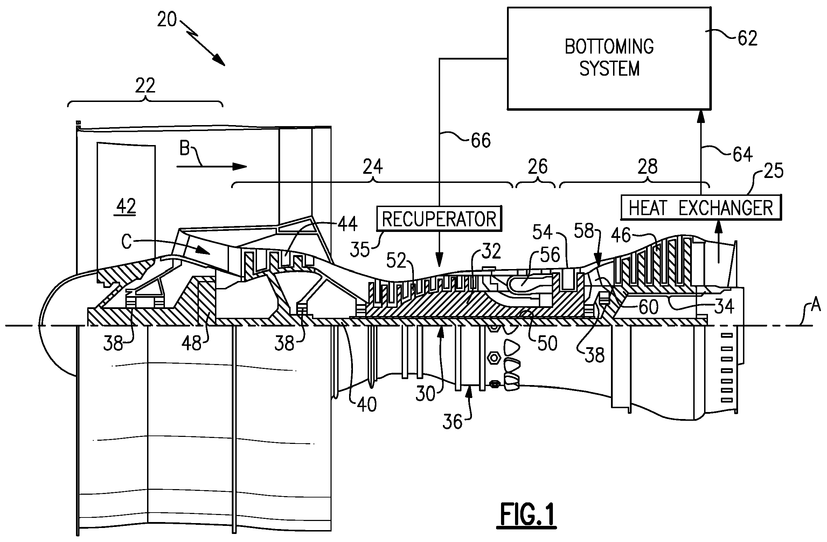

Figure 1 schematically illustrates an example gas turbine engine 20 that includes a fan section 22, a compressor section 24, a combustor section 26 and a turbine section 28. The fan section 22 drives air along a bypass flow path B, while the compressor section 24 draws air in along a core flow path C where air is compressed and communicated to a combustor section 26. In the combustor section 26, air is mixed with fuel and ignited to generate a high pressure exhaust gas stream that expands through the turbine section 28 where energy is extracted and utilized to drive the fan section 22 and the compressor section 24.

Although the disclosed non-limiting embodiment depicts a two-spool turbofan gas turbine engine, it should be understood that the concepts described herein are not limited to use with two-spool turbofans as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan section 22 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 58 of the engine static structure 36 is arranged generally between the high pressure turbine 54 and the low pressure turbine 46. The mid-turbine frame 58 further supports bearing systems 38 in the turbine section 28 as well as setting airflow entering the low pressure turbine 46.

Airflow through the core airflow path C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 58 includes vanes 60, which are in the core airflow path and function as an inlet guide vane for the low pressure turbine 46. Utilizing the vane 60 of the mid-turbine frame 58 as the inlet guide vane for low pressure turbine 46 decreases the length of the low pressure turbine 46 without increasing the axial length of the mid-turbine frame 58. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six (6), with an example embodiment being greater than about ten (10). The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten (10:1) and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition -- typically cruise at about 0.8 Mach and about 35,000 feet (10,688 m). The flight condition of 0.8 Mach and 35,000 ft. (10,688 m), with the engine at its best fuel consumption - also known as "bucket cruise Thrust Specific Fuel Consumption ('TSFC')" - is the industry standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment, the low fan pressure ratio is less than about 1.45.

"Low corrected fan tip speed" is the actual fan tip speed in ft/sec divided by an industry standard temperature correction of [(Tram °R)/(518.7°R)]^{0.5}. The "Low corrected fan tip speed", as disclosed herein according to one non-limiting embodiment, is less than about 1150 ft/second (350.5 m/s).

The example gas turbine engine includes the fan section 22 that comprises in one non-limiting embodiment less than about 26 fan blades 42. In another non-limiting embodiment, the fan section 22 includes less than about 20 fan blades 42. Moreover, in one disclosed embodiment the low pressure turbine 46 includes no more than about 6 turbine rotors schematically indicated at 34. In another non-limiting example embodiment, the low pressure turbine 46 includes about 3 turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

Gas turbine engines designs are seeking to increase overall efficiency by generating higher overall pressure ratios. Thermal energy produced through the combustion process is wasted as the high energy exhaust gas flow is vented to atmosphere after expansion through the turbine section 28. Increased temperatures of fuel and air prior to entering the combustor 56 can improve engine efficiency. Moreover, the thermal energy vented to atmosphere can be used to drive other systems to produce power.

A disclosed example engine embodiment includes a bottoming system 62 that transfers thermal energy, schematically indicated at 64, to colder parts of the engine as indicated at 66. The bottoming system 62 includes a working fluid that absorbs thermal energy from the exhaust gas flow in a heat exchanger 25. The working fluid is then communicated with the core air flow forward of the combustor 56 in a recuperator 35. The recapture of thermal energy from the exhaust gas flow and transfer to preheat the core airflow in a location forward of the combustor 56 provides for improved engine operating efficiencies. In one disclosed example, thermal energy from the exhaust gas flow is transferred into the core air flow in the compressor section 24 before entering the combustor 56..

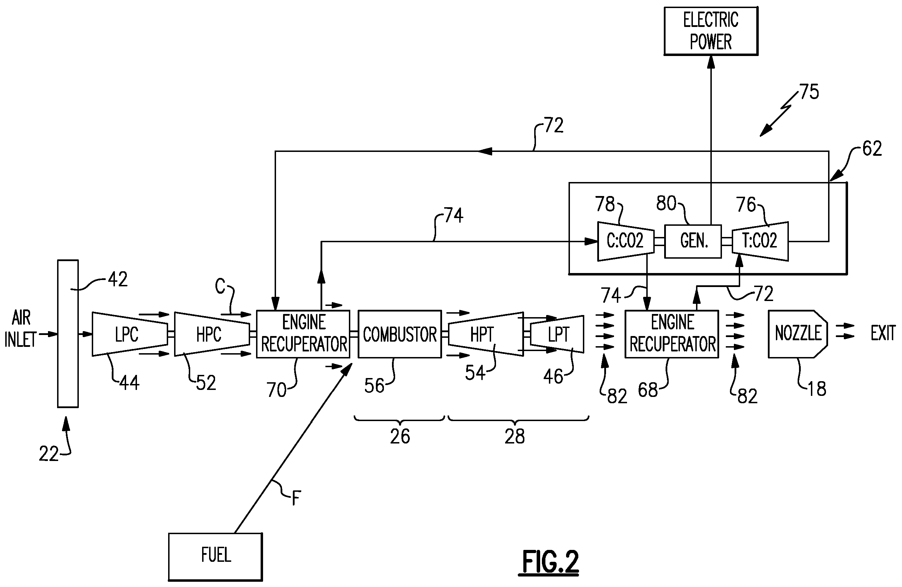

Referring to Figure 2, another example bottoming system 62 includes a closed flow circuit of supercritical carbon dioxide (sCO2) working fluid that accepts thermal energy from an exhaust gas flow 82 and transfers the accepted thermal energy to cooler portions of the engine 20. In this disclosed example, thermal energy is transferred to a location forward of the combustor 56 and used to heat the core flow C. By heating the air arriving at the combustor, less fuel is required to achieve the target combustion temperature, improving engine thermal efficiency.

In the illustrated example, the working fluid is CO2, and is maintained at or above a supercritical point throughout the entirety of the working cycle. Due to being maintained at or above the supercritical point, the bottoming system 62 is referred to as a supercritical CO2 cycle (sCO2 cycle).

The example bottoming system 62 includes a bottoming turbine 76 that is coupled to a bottoming compressor 78. The bottoming turbine 76 may also be coupled to an electric machine such as a generator 80.

A first recuperator 68 is in thermal contact with the exhaust gas flow 82. In this disclosed example, the first recuperator 68 is disposed aft of the turbine section 28 and forward of exhaust nozzle 18. It should be appreciated, that the first recuperator 68 may be located anywhere within the engine 20 to provide for acceptance of thermal energy.

A second recuperator 70 is located forward of the combustor 56 for adding thermal energy back into the engine 20. In this disclosed example, the second recuperator 70 is located to heat the core flow C exiting the compressor section 24 prior to entering the combustor 56.

The first and second recuperators 68, 70 are heat exchangers that are configured to place the core airflow C in thermal contact with the flow of sCO2 working fluid flow schematically indicated at 72. The sCO2 working fluid flow is directed through a flow circuit 75 to transfer thermal energy between hot and cooler portions of the engine 20.

In this example, the flow circuit 75 directs the sCO2 working fluid flow from an initial temperature and pressure into the first recuperator 68. In the first recuperator 68, the sCO2 working fluid flow is heated by the exhaust gas flow 82. The hot sCO2 working fluid flow 72 is communicated to through the bottoming turbine 76 and to the second recuperator 70. In the second recuperator 70, the hot sCO2 working fluid flow 72 heats the core flow C and is then communicated to the bottoming compressor 78.

The bottoming turbine 76 expands the sCO2 to lower pressure in order to extract power. It may expand the sCO2 below the critical pressure, which is referred to as overexpansion. The bottoming compressor 78 returns the sCO2 to the supercritical pressure state at the beginning of the cycle.

In this disclosed embodiment, the bottoming turbine 76 drives a generator 80 to produce electric power. The electric power produced by the bottoming system 62 may be utilized anywhere within the aircraft or engine 20 and reduces the amount of electric power required to be generated by the primary engine 20. Alternatively, the power produced may be used to directly assist the main engine shaft through a mechanical coupling, which may or may not include gear reduction. Alternatively, the power produced may directly drive another rotating component, such as an auxiliary propulsor for the aircraft.

Operation of the bottoming system 62 to recover and use waste heat begins with the bottoming compressor 78 compressing the working fluid, and passing the compressed working fluid flow 74 to the first recuperator 68. In the first recuperator, sCO2 working fluid flow is heated and directed to the bottoming turbine 76. In the bottoming turbine 76, the heated sCO2 working fluid flow working fluid 72 is expanded to drive rotation. The sCO2 working fluid flow exits the bottoming turbine 76 and is routed to the second recuperator 70 to transfer thermal energy into the core flow C prior to entering the combustor 56.

In the bottoming turbine 76, sCO2 working fluid flow is expanded below the pressure state at the beginning of the cycle. The rotation of the bottoming turbine 76 drives rotation of the compressor 78 through a coupling therebetween. The compressor elevates the pressure to return the sCO2 working fluid flow to a supercritical point. The process continues with a constant flow sCO2 working fluid through the circuit 75.

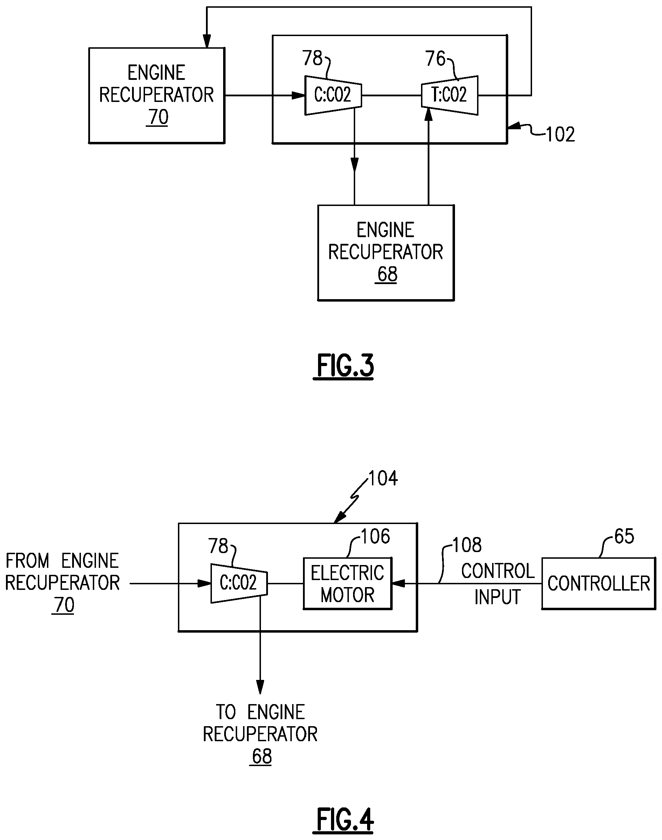

Referring to Figure 3, another bottoming cycle system is schematically shown and indicated at 102. The bottoming cycle system 102 includes the bottoming compressor 78 driven by the bottoming turbine 76 as shown and described in the previous embodiment. The bottoming cycle system 102 has the bottoming turbine 76 driving only the bottoming turbine 78, without a generator or other driven device. Because the bottoming turbine 76 is driving only the bottoming compressor 78, the bottoming turbine 76 may be designed to operate at a more efficient operating speed than if other devices were also being driven. Another device, such as a generator operates best at one operating speed, while the bottoming compressor 76 may best operate at a different operating speed. Thereby, the speed of operation of the bottoming turbine 76 may require a compromise to drive both. However, in this disclosed embodiment, the bottoming turbine 76 may be designed and operated at a speed desired to provide efficient operation of the bottoming compressor 78.

Referring to Figure 4, another bottoming cycle system 104 is schematically indicated at 104 and includes an electric motor 106 operated to drive the bottoming compressor 78. The electric motor 106 drives the bottoming compressor 78 at a speed based on a control input 108 from a controller 65. The controller 65 and control input 108 may include instructions from an engine and/or aircraft controller. The control input 108 may be based on a measured parameter or on a predefined schedule to provide desired operation of the bottoming compressor 78.

The bottoming cycle system 104 decouples operation of the bottoming compressor 78 from a turbine to provide for operation independent of engine operation and the amount of heat accepted by the sCO2 working fluid flow. The sCO2 working fluid flow may have varying amounts of heat energy based on the heat produced by the engine. This variation in heat energy may vary operation of the turbine driving the bottoming compressor 78 in a way that differs from variations in demand that may occur during engine operation. Moreover, driving the bottoming compressor 78 with the electric motor 106 is based on a control input 108 that can be adjusted to tailor operation to specific conditions. Additionally, the electric motor 106 may be able to more quickly adapt to desired changes in operation to better accommodate changing demand and operating conditions.

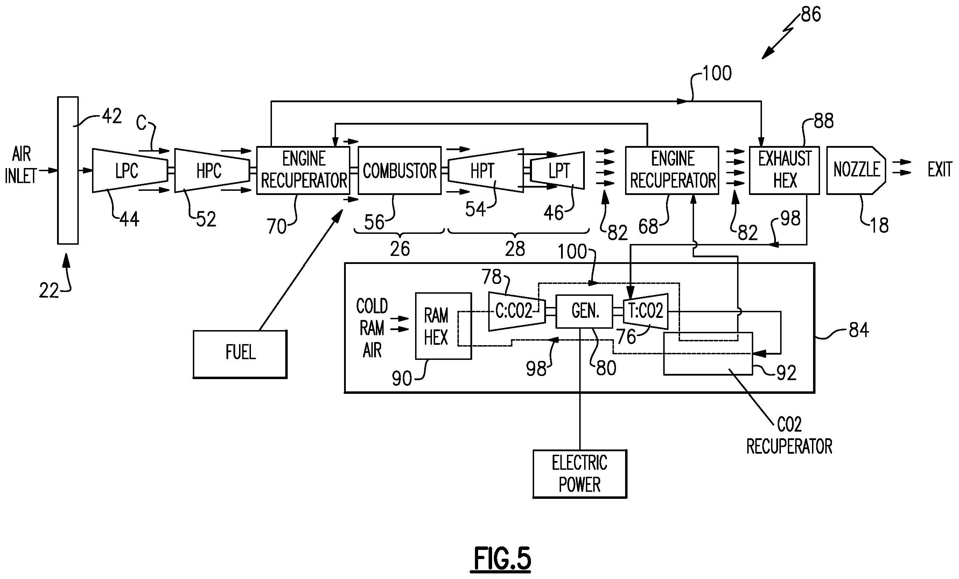

Referring to Figure 5, another example engine assembly 86 includes a bottoming cycle 84 that is utilized to transfer heat within the engine assembly and to produce power from reclaimed heat within the exhaust gas flow.

The sCO2 working fluid flow is circulated directly from the first recuperator 68 to the second recuperator 70. In the first recuperator 68 the sCO2 working fluid flow is heated by the exhaust gases 82. The heated sCO2 working fluid is directed to the second recuperator 70 that is in thermal communication with the core engine flow forward of the combustor 56. From the second recuperator, the sCO2 working fluid flow is directed to an exhaust heat exchanger 88.

In the exhaust heat exchanger 88, the sCO2 working fluid flow is again heated and communicated back to the bottoming turbine 76. Expansion of the sCO2 working fluid flow through the bottoming turbine 76 drives rotation of the turbine 76 to drive the bottoming generator 80 and bottoming compressor 78. The sCO2 working fluid flow from the bottoming turbine 76 is routed through a bottoming recuperator 92. In the bottoming recuperator 92, the hot sCO2 working fluid flow transfers heat into sCO2 working fluid flow within exhausted from an outlet of the bottoming compressor 78. The cooled sCO2 working fluid flow is then communicated back to the first recuperator 68 for heating.

The heated sCO2 working fluid flow from the bottoming recuperator 92 is directed through a ram air heat exchanger 90 for cooling and then to the bottoming compressor 78. The bottoming compressor 78 returns the sCO2 working fluid flow to the supercritical pressure and returns the flow to the bottoming recuperator 92. The bottoming turbine 76 drives the generator 80 to generate electric power. The exhaust heat exchanger 88 provides additional heat input to the bottoming system 84 to perform additional work. In this example embodiment, the additional work output is in the form of electric power produced by driving the generator. However, other energy production that can be performed from a driven turbine may be utilized and is within the contemplation and scope of this disclosure.

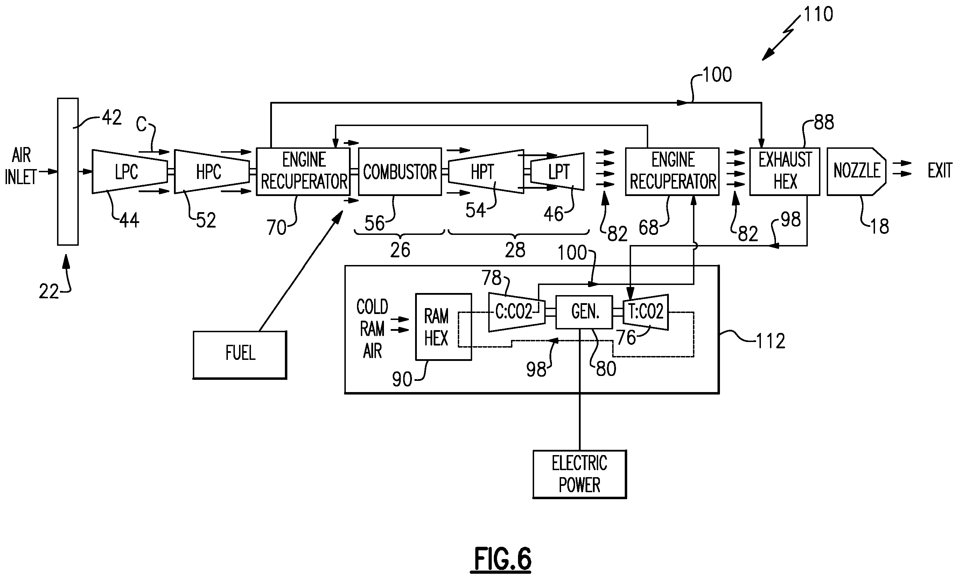

Referring to Figure 6, another example engine assembly 110 includes a bottoming cycle system 112 that does not include a bottoming recuperator 92. In this disclosed embodiment, sCO2 working fluid flow is exhausted from the bottoming turbine 76 through the ram air heat exchanger 90 to the bottoming compressor 78. In this example, heat is not transferred between sCO2 working fluid flows of different temperatures, but is instead fed to the respective heat exchangers in the engine 110. Removing the bottoming recuperator 92 is another configuration that provides for tailoring of the bottoming system 112 to application specific operating conditions.

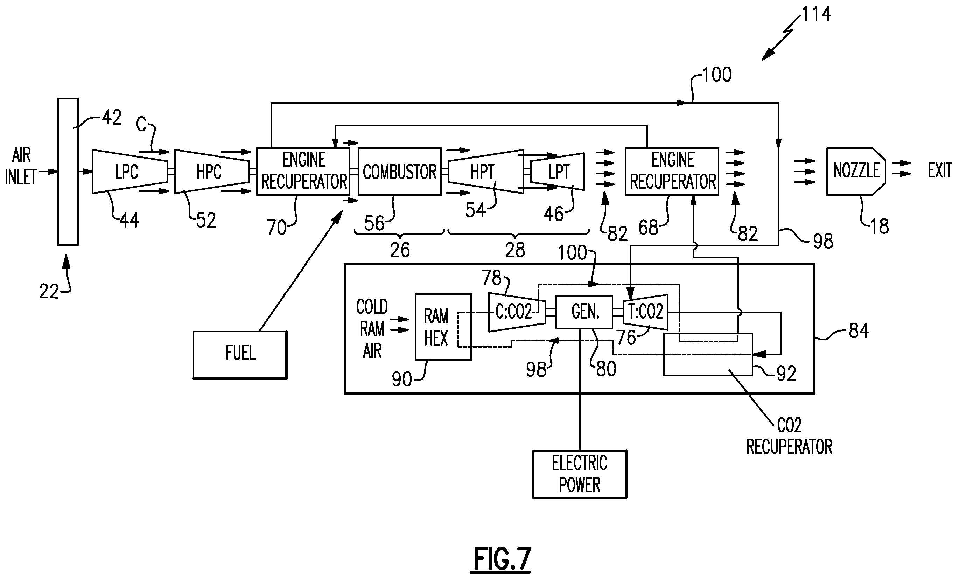

Referring to Figure 7, another example engine assembly 114 with the bottoming cycle 84 operates without the exhaust heat exchanger 88 shown in Figure 6. The first engine recuperator 68 provides the thermal and energy transfer desired to operate the bottoming cycle system 84. The sCO2 working fluid flow 100 that is exhausted from the engine recuperator 70 provides the thermal transfer required to provide the desired amount of power output. Additional heating of the sCO2 working fluid may not always be needed and the example system 114 illustrates how the example bottoming system 84 maybe incorporated with different heat exchangers and recuperators to provide the desired amount of energy reclamation.

Accordingly, the disclosed example bottoming systems provide for recovery of heat that would otherwise be unused to improve overall engine efficiency and operation.

While described above in conjunction with a geared turbofan engine, it is appreciated that the waste heat recovery system described herein can be utilized in conjunction with any other type of turbine engine with only minor modifications that are achievable by one of skill in the art.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A gas turbine engine (20; 86; 110; 114) comprising;
a core engine including a core flow path (C) connecting a compressor section (24), combustor section (26) and a turbine section (28);
a bottoming cycle system (62; 84; 102; 104; 112) including a supercritical CO2 (sCO2) working fluid flow (72; 74; 100); and
a first recuperator (68) disposed in the core flow path (C) downstream of the turbine section (28), the first recuperator (68) configured to transfer thermal energy (64) from a core flow aft of the turbine section (28) to the sCO2 working fluid flow (72; 74; 100);
**characterised by** the engine (20... 114) comprising
a second recuperator (70) disposed in the compressor section (24), the second recuperator (70) configured to transfer thermal energy from the sCO2 working fluid flow (72; 74; 100) into a compressed core flow of the core flow path (C) at a location forward of the combustor section (26) in the compressor section (24).

2. The gas turbine engine (20) as recited in claim 1, wherein the bottoming cycle system (62; 102) includes a bottoming compressor (78) coupled to a bottoming turbine (76), wherein heated sCO2 working fluid flow (72) exhausted from the first recuperator (68) drives the bottoming turbine (76).

3. The gas turbine engine (20) as recited in claim 2, wherein the sCO2 working fluid flow (72) exhausted from the bottoming turbine (76) is communicated to an inlet of the second recuperator (70).

4. The gas turbine engine (20) as recited in claim 3, wherein the bottoming compressor (78) receives sCO2 working fluid flow (74) exhausted from the second recuperator (70) and exhausts sCO2 working fluid flow (74) to an inlet of the first recuperator (68).

5. The gas turbine engine (20) as recited in any of claims 2 to 4, including a bottoming electric machine (80) coupled to at least one of the bottoming compressor (78) and the bottoming turbine (76), wherein the bottoming electric machine (80) optionally comprises a motor (106) or generator (80) driven by the bottoming turbine (76).

6. The gas turbine engine (20; 86; 110; 114) as recited in claim 1, wherein a heated sCO2 working fluid flow from the first recuperator (68) is communicated to the second recuperator (70).

7. The gas turbine engine (20; 86; 110) as recited in claim 6, further including an exhaust heat exchanger (25; 88) configured to transfer thermal energy into a sCO2 working fluid flow (100) and exhaust the heated sCO2 working fluid flow (98) to a bottoming turbine (76), and optionally further including a motor (104) or generator (80) coupled to the bottoming turbine (76).

8. The gas turbine engine (20; 86) as recited in claim 7, wherein the bottom cycle system (84) includes a bottoming compressor (78) coupled to a or the bottoming turbine (76) and a bottoming recuperator (92), wherein the sCO2 working fluid flow exhausted from the bottoming turbine (76) is communicated to the bottoming recuperator (92).

9. The gas turbine engine (20; 86) as recited in claim 8, wherein the sCO2 working fluid flow is heated by the core flow aft of the turbine section (28) and communicated to the bottoming turbine (76), the sCO2 working fluid flow expands through the bottoming turbine (76) and is exhausted to the bottoming recuperator (92) and placed in thermal transfer contact with a cooler sCO2 working fluid flow (100) from the bottoming compressor (78) that is then exhausted to the first recuperator (68) where the sCO2 working fluid flow (100) is heated and communicated to the second recuperator (70) to transfer thermal energy into the core flow (C) forward of the combustor section (26) then back through the exhaust heat exchanger (88) to the bottoming turbine (76), optionally wherein the sCO2 working fluid flow (98) from the bottoming recuperator (92) is communicated through a cool air heat exchanger (90) where the sCO2 working fluid flow (98) is cooled and communicated through the bottoming compressor (78) back to the bottoming recuperator (92).

10. The gas turbine engine (20; 86; 114) as recited in any preceding claim, wherein a hot flow of sCO2 fluid flow is placed in thermal communication with a cooler flow of sCO2 working fluid within a or the bottoming recuperator (92).

11. The gas turbine engine (20) as recited in claim 1, wherein the bottoming cycle system (104) includes a bottoming compressor (78) coupled to an electric motor (106), wherein the electric motor (106) drives the bottoming compressor (78).

12. A method of operating a gas turbine engine (20; 86; 110; 114) comprising:
transferring thermal energy into a super critical CO2 (sCO2) working fluid flow (100) from an exhaust gas flow (82) within a first recuperator (68);
communicating a heated sCO2 working fluid flow to a location forward of a combustor section (26) of the gas turbine engine (20); and
transferring thermal energy from the heated sCO2 working fluid flow to a compressed core flow within the core flow path (C) at the location forward of the combustor section (26) by a second recuperator (70) disposed in a compressor section (24).

13. The method as recited in claim 12, further comprising driving a bottoming turbine (76) by expanding the heated sCO2 working fluid through the bottoming turbine (76).

14. The method as recited in claim 13, further comprising generating electric power by driving a generator (80) with the bottoming turbine (76).

15. The method as recited in any of claims 12 to 14, further comprising pumping the sCO2 working fluid flow with a bottoming compressor (78) driven by the bottoming turbine (76).

## Patentansprüche

1. Gasturbinentriebwerk (20; 86; 110; 114), umfassend:
ein Kerntriebwerk mit einem Kernstromweg (C), der einen Verdichterabschnitt (24), einen Brennkammerabschnitt (26) und einen Turbinenabschnitt (28) verbindet;
ein Bottoming-Cycle-System (62; 84; 102; 104; 112) mit einem überkritischen CO2 (sCO2)-Arbeitsfluidstrom (72; 74; 100); und
einen ersten Rekuperator (68), der im Kernstromweg (C) stromabwärts des Turbinenabschnitts (28) angeordnet ist, wobei der erste Rekuperator (68) dafür ausgelegt ist, thermische Energie (64) von einem Kernstrom stromabwärts des Turbinenabschnitts (28) auf den sCO2-Arbeitsfluidstrom (72; 74; 100) zu übertragen;
**dadurch gekennzeichnet, dass** das Triebwerk (20...114) umfasst:
einen zweiten Rekuperator (70), der im Verdichterabschnitt (24) angeordnet ist, wobei der zweite Rekuperator (70) dafür ausgelegt ist, thermische Energie aus dem sCO2-Arbeitsfluidstrom (72; 74; 100) in einen verdichteten Kernstrom des Kernstromwegs (C) an einer Stelle stromaufwärts des Brennkammerabschnitts (26) im Verdichterabschnitt (24) zu übertragen.

2. Das Gasturbinentriebwerk (20) nach Anspruch 1, wobei das Bottoming-Cycle-System (62; 102) einen Bottoming-Verdichter (78) enthält, der mit einer Bottoming-Turbine (76) gekoppelt ist, wobei erhitzter sCO2-Arbeitsfluidstrom (72), der aus dem ersten Rekuperator (68) ausgestoßen wird, die Bottoming-Turbine (76) antreibt.

3. Das Gasturbinentriebwerk (20) nach Anspruch 2, wobei der sCO2-Arbeitsfluidstrom (72), der aus der Bottoming-Turbine (76) ausgestoßen wird, zu einem Einlass des zweiten Rekuperators (70) geleitet wird.

4. Das Gasturbinentriebwerk (20) nach Anspruch 3, wobei der Bottoming-Verdichter (78) den sCO2-Arbeitsfluidstrom (74), der aus dem zweiten Rekuperator (70) ausgestoßen wird, aufnimmt und den sCO2-Arbeitsfluidstrom (74) zu einem Einlass des ersten Rekuperators (68) ausstößt.

5. Das Gasturbinentriebwerk (20) nach einem der Ansprüche 2 bis 4, mit einer Bottoming-Elektromaschine (80), die mit dem Bottoming-Verdichter (78) und/oder der Bottoming-Turbine (76) gekoppelt ist, wobei die Bottoming-Elektromaschine (80) optional einen Motor (106) oder einen Generator (80) umfasst, der von der Bottoming-Turbine (76) angetrieben wird.

6. Das Gasturbinentriebwerk (20; 86; 110; 114) nach Anspruch 1, wobei ein erhitzter sCO2-Arbeitsfluidstrom aus dem ersten Rekuperator (68) zum zweiten Rekuperator (70) geleitet wird.

7. Das Gasturbinentriebwerk (20; 86; 110) nach Anspruch 6, ferner mit einem Abgaswärmetauscher (25; 88), der dafür ausgelegt ist, thermische Energie in einen sCO2-Arbeitsfluidstrom (100) zu übertragen und den erhitzten sCO2-Arbeitsfluidstrom (98) zu einer Bottoming-Turbine (76) auszustoßen, und optional ferner mit einem Motor (104) oder Generator (80), der mit der Bottoming-Turbine (76) gekoppelt ist.

8. Das Gasturbinentriebwerk (20; 86) nach Anspruch 7, wobei das Bottoming-Cycle-System (84) einen Bottoming-Verdichter (78) enthält, der mit einer oder der Bottoming-Turbine (76) und einem Bottoming-Rekuperator (92) gekoppelt ist, wobei der aus der Bottoming-Turbine (76) ausgestoßene sCO2-Arbeitsfluidstrom zum Bottoming-Rekuperator (92) geleitet wird.

9. Das Gasturbinentriebwerk (20; 86) nach Anspruch 8, wobei der sCO2-Arbeitsfluidstrom durch den Kernstrom stromabwärts des Turbinenabschnitts (28) erhitzt und zur Bottoming-Turbine (76) geleitet wird, wobei der sCO2-Arbeitsfluidstrom durch die Bottoming-Turbine (76) expandiert und zum Bottoming-Rekuperator (92) ausgestoßen wird und in thermischen Übertragungskontakt mit einem kühleren sCO2-Arbeitsfluidstrom (100) von dem Bottoming-Verdichter (78) gebracht wird, der dann zum ersten Rekuperator (68) ausgestoßen wird, wo der sCO2-Arbeitsfluidstrom (100) erhitzt und zum zweiten Rekuperator (70) geleitet wird, um thermische Energie in den Kernstrom (C) stromaufwärts des Brennkammerabschnitts (26) zu übertragen, und dann zurück durch den Abgaswärmetauscher (88) zur Bottoming-Turbine (76) geleitet wird, wobei optional der sCO2-Arbeitsfluidstrom (98) aus dem Bottoming-Rekuperator (92) durch einen Kaltluftwärmetauscher (90) geleitet wird, wo der sCO2-Arbeitsfluidstrom (98) abgekühlt und durch den Bottoming-Verdichter (78) zurück zum Bottoming-Rekuperator (92) geleitet wird.

10. Das Gasturbinentriebwerk (20; 86; 114) nach einem der vorhergehenden Ansprüche, wobei ein heißer sCO2-Fluidstrom in thermischer Verbindung mit einem kühleren sCO2-Arbeitsfluidstrom innerhalb eines oder des Bottoming-Rekuperators (92) gebracht wird.

11. Das Gasturbinentriebwerk (20) nach Anspruch 1, wobei das Bottoming-Cycle-System (104) einen Bottoming-Verdichter (78) enthält, der mit einem Elektromotor (106) gekoppelt ist, wobei der Elektromotor (106) den Bottoming-Verdichter (78) antreibt.

12. Verfahren zum Betreiben eines Gasturbinentriebwerks (20; 86; 110; 114), umfassend:
Übertragen thermischer Energie aus einem Abgasstrom (82) in einen überkritischen CO2 (sCO2)-Arbeitsfluidstrom (100) innerhalb eines ersten Rekuperators (68);
Leiten eines erhitzten sCO2-Arbeitsfluidstroms zu einer Stelle stromaufwärts eines Brennkammerabschnitts (26) des Gasturbinentriebwerks (20); und
Übertragen thermischer Energie von dem erhitzten sCO2-Arbeitsfluidstrom auf einen verdichteten Kernstrom innerhalb des Kernstromwegs (C) an der Stelle stromaufwärts des Brennkammerabschnitts (26) durch einen zweiten Rekuperator (70), der in einem Verdichterabschnitt (24) angeordnet ist.

13. Das Verfahren nach Anspruch 12, ferner umfassend das Antreiben einer Bottoming-Turbine (76) durch Expandieren des erhitzten sCO2-Arbeitsfluids durch die Bottoming-Turbine (76).

14. Das Verfahren nach Anspruch 13, ferner umfassend das Erzeugen elektrischer Leistung durch Antreiben eines Generators (80) mit der Bottoming-Turbine (76).

15. Das Verfahren nach einem der Ansprüche 12 bis 14, ferner umfassend das Pumpen des sCO2-Arbeitsfluidstroms mit einem Bottoming-Verdichter (78), der von der Bottoming-Turbine (76) angetrieben wird.

## Revendications

1. Moteur à turbine à gaz (20 ; 86 ; 110 ; 114) comprenant :
un moteur central comprenant un passage d'écoulement central (C) reliant une section de compresseur (24), une section de chambre de combustion (26) et une section de turbine (28) ;
un système de cycle de valorisation (62 ; 84 ; 102 ; 104 ; 112) comprenant un écoulement de fluide de travail au CO2 supercritique (sCO2) (72 ; 74 ; 100) ; et
un premier récupérateur (68) disposé dans le passage d'écoulement central (C) en aval de la section de turbine (28), le premier récupérateur (68) étant configuré pour transférer de l'énergie thermique (64) d'un écoulement central situé en aval de la section de turbine (28) vers l'écoulement de fluide de travail sCO2 (72 ; 74 ; 100) ;
**caractérisé en ce que** le moteur (20...114) comprend
un second récupérateur (70) disposé dans la section de compresseur (24), le second récupérateur (70) étant configuré pour transférer de l'énergie thermique de l'écoulement de fluide de travail sCO2 (72 ; 74 ; 100) vers un écoulement central comprimé du passage d'écoulement central (C) en un emplacement situé en amont de la section de chambre de combustion (26) dans la section de compresseur (24).

2. Moteur à turbine à gaz (20) selon la revendication 1, dans lequel le système de cycle de valorisation (62 ; 102) comprend un compresseur de valorisation (78) accouplé à une turbine de valorisation (76), dans lequel l'écoulement de fluide de travail sCO2 chauffé (72) évacué du premier récupérateur (68) entraîne la turbine de valorisation (76).

3. Moteur à turbine à gaz (20) selon la revendication 2, dans lequel l'écoulement de fluide de travail sCO2 (72) évacué de la turbine de valorisation (76) est communiqué à une entrée du second récupérateur (70).

4. Moteur à turbine à gaz (20) selon la revendication 3, dans lequel le compresseur de valorisation (78) reçoit l'écoulement de fluide de travail sCO2 (74) évacué du second récupérateur (70) et évacue l'écoulement de fluide de travail sCO2 (74) vers une entrée du premier récupérateur (68).

5. Moteur à turbine à gaz (20) selon l'une quelconque des revendications 2 à 4, comprenant une machine électrique de valorisation (80) accouplée à au moins l'un parmi le compresseur de valorisation (78) et la turbine de valorisation (76), dans lequel la machine électrique de valorisation (80) comprend éventuellement un moteur (106) ou un générateur (80) entraîné par la turbine de valorisation (76).

6. Moteur à turbine à gaz (20 ; 86 ; 110 ; 114) selon la revendication 1, dans lequel un écoulement de fluide de travail sCO2 chauffé provenant du premier récupérateur (68) est communiqué au second récupérateur (70).

7. Moteur à turbine à gaz (20 ; 86 ; 110) selon la revendication 6, comprenant en outre un échangeur de chaleur d'échappement (25 ; 88) configuré pour transférer de l'énergie thermique dans un écoulement de fluide de travail sCO2 (100) et évacuer l'écoulement de fluide de travail sCO2 chauffé (98) vers une turbine de valorisation (76), et comprenant en outre, éventuellement, un moteur (104) ou un générateur (80) accouplé à la turbine de valorisation (76).

8. Moteur à turbine à gaz (20 ; 86) selon la revendication 7, dans lequel le système de cycle de valorisation (84) comprend un compresseur de valorisation (78) accouplé à une turbine de valorisation (76) et un récupérateur de valorisation (92), dans lequel l'écoulement de fluide de travail sCO2 évacué de la turbine de valorisation (76) est communiqué au récupérateur de valorisation (92).

9. Moteur à turbine à gaz (20 ; 86) selon la revendication 8, dans lequel l'écoulement de fluide de travail sCO2 est chauffé par l'écoulement central situé en aval de la section de turbine (28) et communiqué à la turbine de valorisation (76), l'écoulement de fluide de travail sCO2 se dilate à travers la turbine de valorisation (76) et est évacué vers le récupérateur de valorisation (92) et placé en contact de transfert thermique avec un écoulement de fluide de travail sCO2 plus froid (100) provenant du compresseur de valorisation (78) qui est ensuite évacué vers le premier récupérateur (68) où l'écoulement de fluide de travail sCO2 (100) est chauffé et communiqué au second récupérateur (70) pour transférer de l'énergie thermique dans l'écoulement central (C) en amont de la section de chambre de combustion (26) puis renvoyé à travers l'échangeur de chaleur d'échappement (88) vers la turbine de valorisation (76), dans lequel, éventuellement, l'écoulement de fluide de travail sCO2 (98) provenant du récupérateur de valorisation (92) est communiqué à travers un échangeur de chaleur à air froid (90) où l'écoulement de fluide de travail sCO2 (98) est refroidi et communiqué à travers le compresseur de valorisation (78) de retour vers le récupérateur de valorisation (92).

10. Moteur à turbine à gaz (20 ; 86 ; 114) selon l'une quelconque des revendications précédentes, dans lequel un écoulement chaud de fluide sCO2 est placé en communication thermique avec un écoulement plus froid de fluide de travail sCO2 à l'intérieur d'un récupérateur de valorisation (92).

11. Moteur à turbine à gaz (20) selon la revendication 1, dans lequel le système de cycle de valorisation (104) comprend un compresseur de valorisation (78) accouplé à un moteur électrique (106), dans lequel le moteur électrique (106) entraîne le compresseur de valorisation (78).

12. Procédé de fonctionnement d'un moteur à turbine à gaz (20 ; 86 ; 110 ; 114) comprenant :
le transfert d'énergie thermique dans un écoulement de fluide de travail au CO2 supercritique (sCO2) (100) à partir d'un écoulement de gaz d'échappement (82) à l'intérieur d'un premier récupérateur (68) ;
la communication d'un écoulement de fluide de travail sCO2 chauffé vers un emplacement situé en amont d'une section de chambre de combustion (26) du moteur à turbine à gaz (20) ; et
le transfert d'énergie thermique de l'écoulement de fluide de travail sCO2 chauffé vers un écoulement central comprimé à l'intérieur du passage d'écoulement central (C) à l'emplacement situé en amont de la section de chambre de combustion (26) par un second récupérateur (70) disposé dans une section de compresseur (24).

13. Procédé selon la revendication 12, comprenant en outre l'entraînement d'une turbine de valorisation (76) par dilatation du fluide de travail sCO2 chauffé à travers la turbine de valorisation (76).

14. Procédé selon la revendication 13, comprenant en outre la production d'énergie électrique par entraînement d'un générateur (80) avec la turbine de valorisation (76).

15. Procédé selon l'une quelconque des revendications 12 à 14, comprenant en outre le pompage de l'écoulement de fluide de travail sCO2 avec un compresseur de valorisation (78) entraîné par la turbine de valorisation (76).
